# EUROPEAN PATENT APPLICATION

(11) **EP 1 477 963 A1**
(43) Date of publication of application: **17.11.2004**
(21) Application number: 04009866.7
(22) Date of filing: 26.04.2004
(51) Int. Cl.: G10K 11/162, G10K 11/168, B32B 15/08, B32B 33/00, B60R 13/08, B32B 25/14, B32B 25/04

(54) **Flexible magnetic sound and vibration damping laminate with thermosetting adhesive layer**

(30) Priority: 25.04.2003 US 423294
(71) Applicant: Material Sciences Corporation, Engineered Materials and Solutions Group, Inc., Elk Grove Village, Illinois 60007 (US)
(72) Inventor: Dobrusky, Scott R., Streamwood Illinois 60107 (US); Hatkow, John M., Plymouth Michigan 48170 (US); Levine, Harold H., Encinitas CA 92024 (US)
(74) Representative: Wehnert, Werner

(57) **Abstract**

A flexible noise and vibration damping laminate attachable to a metallic substrate having a first and second constraining layers sandwiching a first viscoelastic layer, a second viscoelastic layer in abutting relationship with the second constraining layer, and a heat activated adhesive disposed on the second viscoelastic layer, all of which are respectively superimposed to the respective adjacent layer.

## Description

### Background of the Invention

The present application relates generally to noise, vibration and harshness damping laminates and, more particularly, to noise, vibration and harshness damping laminates adhered to a metallic substrate with a heat-activated adhesive and temporarily positioned with an independent magnetic layer.

Noise, vibration and harshness laminates are useful in sound and vibration management of various metallic bodies. For example, such laminates may be used on the passenger compartment of an automobile to isolate the passengers from engine noise and other noises and vibrations associated with a typical automobile. Generally, these laminates are made of a bitumen based material modified with plastics or synthetic resins and organic fillers because it afforded the most versatile and cost effective soundproofing medium.

It is well known that the optimal time for installing these sheets is prior to curing the exterior surface paint of an automobile, which typically occurs in a bake oven that can reach temperatures in excess of 190° C. As such, the ability of the adhering material of the sheet must be able to withstand such intense temporary temperatures. It has been found that thermoplastic resin-based adhesives do not provide adequate adhesive strength after the heat-bake process due to loss of mechanical properties as temperatures increase.

As such, it is well known that heat-activated adhesives, such as thermosetting adhesives, are preferred wherein the adhesive's activation point can be appropriately modified, based upon the temperature of the heat-bake process. Such heat-activated adhesives thus have the ability of withstanding the temperatures typically found in the heat-bake process while maintaining the requisite adhesive strength. However, the laminate must somehow be temporarily attached to the metallic medium in the interim until the adhesive is properly activated.

US Patent 3,243,374 teaches the ability of dispersing a ferrite powder within a bitumen based noise and vibration damping sheet to allow preliminary positioning of the sheet during assembly. A heat-activated adhesive is generally provided on the surface of the sheet which contacts the metal surface. As such, when the automobile is subjected to the heat-bake process for final curing of the painted surfaces, the heat-activated adhesive of the noise and vibration damping sheet would adhere to the metal surface.

It is well known that bitumen based products have inherent chemical properties which enter a gaseous phases at very low heat. As such, the laminate as described in the '374 patent are known to have air bubbles trapped between the heat-activated adhesive layer and the bitumen-based soundproofing layer caused by the heat-activation of the adhesive, thus adversely affecting the ultimate soundproofing capabilities of the sheet.

US Patent 4,833,018, attempts to solve this by using a composite bitumen-based soundproofing laminate with a bitumen-compatible antiblocking layer, a bitumen soundproofing layer, a flexible polyester layer thermally resistant up to at least 190° C, a bitumen layer with dispersed finely divided ferrite material and a bitumen-compatible, heat activated adhesive. The polyester layer somewhat prevents air bubble formation during the heat-activation process, but it is still not completely effective due to the inherent properties of the bitumen.

### Summary of the Invention

The present application discloses an improved noise and vibration damping laminate sheet comprising first and second constraining layers sandwiching a first viscoelastic layer. A second viscoelastic layer may be disposed in abutting relationship with the top side of the second constraining layer. A heat-activated adhesive may further be disposed on the top side of the second viscoelastic layer. Either the first or second constraining layer may include a ferrite material dispersed therein capably of producing a magnetic force. The present invention overcomes the disadvantages of prior art magnetically adhering bituminous soundproofing sheets by significantly reducing the amount of gas bubbles created during the heat-activation process.

### Brief Description of the Drawings

For the purpose of facilitating an understanding of the subject matter sought to be protected, there is illustrated in the accompanying drawings embodiments thereof, from an inspection of which, when considered in connection with the following description, the subject matter sought to be protected, its construction and operation, and many of its advantages, should be readily understood and appreciated.

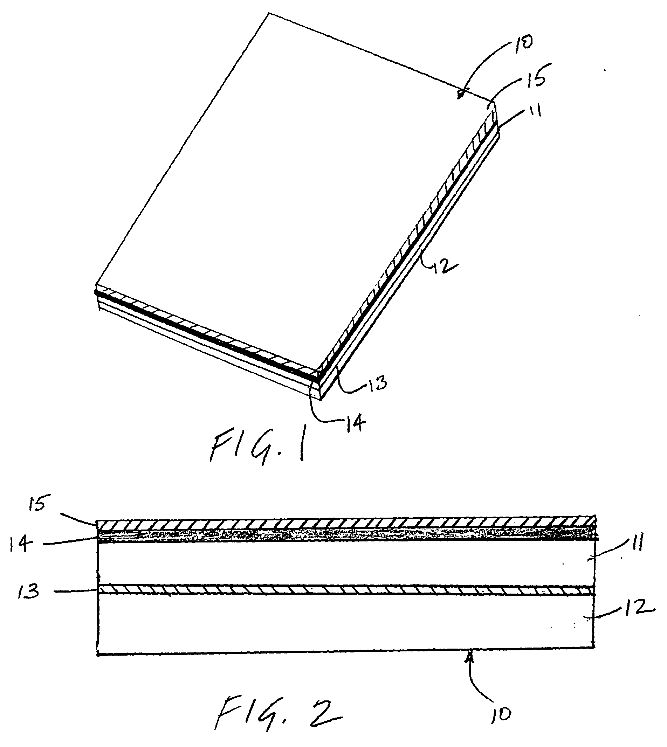

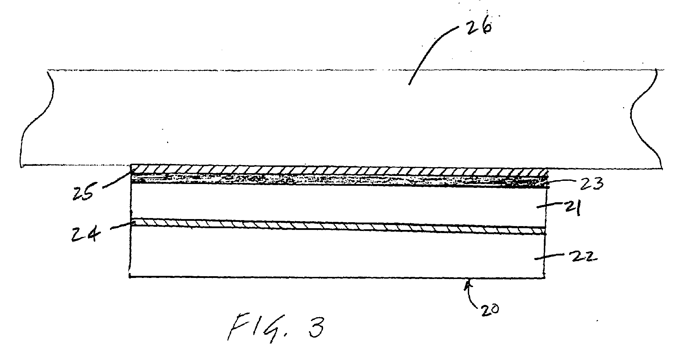

FIG. 1 is a perspective view of an embodiment of the laminated noise and vibration damping sheet of the present application; and

FIG. 2 is an enlarged, cross-sectional view of the sheet of FIG. 1.

### Detailed Description

Disclosed herein is an improved laminated noise and vibration damping sheet. Referring to the figures, a laminated damping sheet 10 having a plurality of superimposed layers attachable to a metallic substrate is shown.

The laminated damping sheet 10 may have first and second constraining layers 11, 12 with a first viscoelastic layer 13 disposed therebetween. A second viscoelastic layer 14 may be disposed in abutting relationship with the top side of the first constraining layer 11. A heat-activated adhesive layer 15 may be disposed on the top side of the second viscoelastic layer 14. In an embodiment, the first constraining layer 11 may have a ferrite material dispersed therein capable of producing a magnetic force. The second constraining layer 12 may include a metal film. Each respective layer may be adhered to each respective adjacent layer with a non-heat reactive adhesive. It will be appreciated that the foregoing orientation references are for illustrative purposes only wherein the laminated damping sheet of the present application can be oriented in any known manner.

The heat-activated adhesive 15 may have an activation temperature approximately matching the temperature commonly encountered in a paint bake cure oven, such as that found in an automobile plant. The heat-activated adhesive 15 may be in lamina form to facilitate easy assembly of the laminate sheet 10 or it may be spread in a liquid or semi-liquid form by a means well known. It is anticipated that the heat-activated adhesive layer 15 will be disposed against a metallic substrate intended to be insulated by the damping sheet 10 and activated during heating in a heat-bake curing oven, such as typically used in an automobile paint curing facility, thereby permanently affixing the sheet 10 to the metallic substrate.

In another embodiment, the first and second constraining layers 11, 12 may be constructed of an initially flexible substrate impregnated with a heat-activated hardening material capable of structurally hardening the flexible substrate at a predetermined temperature. Such a substrate may comprise a woven fabric, such as fiberglass, impregnated with a heat-activated hardening agent, such as an adhesive. It will be appreciated that such a substrate will enhance flexibility of the sheet 10 during installation.

In another embodiment, the first constraining layer 11 may include a metal film and the second constraining layer may have a ferrite material dispersed therein capable of producing a magnetic force.

In yet another embodiment, the first and second viscoelastic layers 13, 14 may be made of the same or different materials and may be constructed of a polymeric material. The first and second viscoelastic layers 13, 14 may be substantially made of an acrylic acid derivative based polymer, an acrylonitrile-butadiene based polymer, a silicon based polymer, a fluorocarbon based polymer or a polyester based polymer, or a combination thereof.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of applicants' contribution. The actual scope of the protection sought is intended to be defined in the following claims when viewed in their proper perspective based on the prior art.

## Claims

1. A noise and vibration damping laminate attachable to a metallic substrate for suppressing noise and vibration, comprising a first and second constraining layer having a first viscoelastic layer disposed therebetween.

2. The damping laminate as claimed in claim 1 further comprising a second viscoelastic layer disposed in abutting relationship to the second constraining layer.

3. The damping laminate as claimed in claim 2 further comprising a heat activated adhesive disposed on the second viscoelastic layer.

4. The damping laminate as claimed in claim 1 wherein the first constraining layer includes a ferrite material capable of producing a magnetic force.

5. The damping laminate as claimed in claim 1 wherein the second constraining layer includes a metal film.

6. The damping laminate as claimed in claim 1 wherein the second constraining layer includes a ferrite material capable of producing a magnetic force.

7. The damping laminate as claimed in claim 1 wherein the first constraining layer includes a metal film.

8. The damping laminate as claimed in claim 1 wherein the first constraining layer is constructed of a flexible substrate impregnated with a heat-activated hardening material capable of hardening the flexible substrate at a predetermined temperature.

9. The damping laminate as claimed in claim 2 wherein the second constraining layer is constructed of a flexible substrate impregnated with a heat-activated hardening material capable of hardening the flexible substrate at a predetermined temperature.

10. The damping laminate as claimed in claim 2 wherein each layer is adhered to each respective adjacent layer.

11. The damping laminate as claimed in claim 1 wherein the first viscoelastic layer is substantially made of a polymeric material selected from the group consisting essentially of acrylic acid derivative polymers, acrylonitrile-butadiene polymers, silicon polymers, fluorocarbon polymers and polyester polymers.

12. The damping laminate as claimed in claim 2 wherein the second viscoelastic layer is substantially made of a polymeric material selected from the group consisting essentially of acrylic acid derivative polymers, acrylonitrile-butadiene polymers, silicon polymers, fluorocarbon polymers and polyester polymers.

13. A noise and vibration damping laminate attachable to a metallic substrate for suppressing noise and vibration, comprising;
a first and second constraining layer having a first viscoelastic layer disposed therebetween;
a second viscoelastic layer disposed in abutting relationship with the second constraining layer; and
a heat activated adhesive disposed on the second viscoelastic layer.

14. The damping laminate as claimed in claim 13 wherein the first constraining layer includes a ferrite material capable of producing a magnetic force.

15. The damping laminate as claimed in claim 13 wherein the second constraining layer is a metal film.

16. The damping laminate as claimed in claim 13 wherein the first and second viscoelastic layers are substantially made of a polymeric material selected from the group consisting essentially of acrylic acid derivative polymers, acrylonitrile-butadiene polymers, silicon polymers, fluorocarbon polymers and polyester polymers.

17. A method of suppressing noise and vibration dissipation through a metallic substrate, comprising:
providing a first constraining layer;
attaching a first polymeric viscoelastic layer to the first constraining layer;
attaching a second constraining layer to the first viscoelastic layer;
attaching a second viscoelastic layer to the second constraining layer; and
disposing a heat activated adhesive on the second viscoelastic layer.

18. The method as claimed in claim 17 wherein the first constraining layer includes a ferrite material capable of producing a magnetic force.

19. The method as claimed in claim 18 further comprising disposing the adhesive on the metallic substrate in abutting relationship with the metallic substrate by using the magnetic force of the first constraining layer.
